# EUROPEAN PATENT APPLICATION

(11) **EP 3 117 700 A1**
(43) Date of publication of application: **18.01.2017**
(21) Application number: 15002079.0
(22) Date of filing: 14.07.2015
(51) Int. Cl.: A01F 25/20

(54) **SILAGE WITHDRAWAL GRIPPER**

(71) Applicant: Overbeek, Jan Willem Josef, 7495 SP Ambt Delden (NL)
(72) Inventor: Overbeek, Jan Willem Josef, 7495 SP Ambt Delden (NL)
(74) Representative: Griebling, Onno

(57) **Abstract**

A silage withdrawal gripper (100) comprises:
at least one silage carrier (120);
a main frame (110) provided with a horizontal coupling bar (105) for coupling to the silage carrier;
a hingeable holder (140) hingedly connected (146) to the main frame;
at least one controllable holder actuator (144, 145) for controlling the hinge position of the holder with respect to the main frame;
wherein the silage carrier (120) comprises quick release link plates (150) for coupling to the coupling bar, wherein each quick release link plate comprises an accommodation space (151) that is open at the rear for receiving the coupling bar,
and a lever portion (153) extending to the rear over the accommodation space;
wherein the lever portion, at its free end, has a recess (154) formed in its upper edge;
wherein the main frame of the silage withdrawal gripper further comprises a controllable latching mechanism (170) engaging said recess.

## Description

### FIELD OF THE INVENTION

The present invention relates in general to an apparatus for displacing dry bulk material such as grass, hay, cattle fodder.

### BACKGROUND OF THE INVENTION

In farming, it is customary to store large supplies of crop residues as animal fodder, indicated as "silage". Typically, this takes the shape of a hill of about 3 meters high and several tens of meters wide. The consistency depends on the source material, and may be granular or powdery but may also be grassy. In any case it is quite compacted after months of storage.

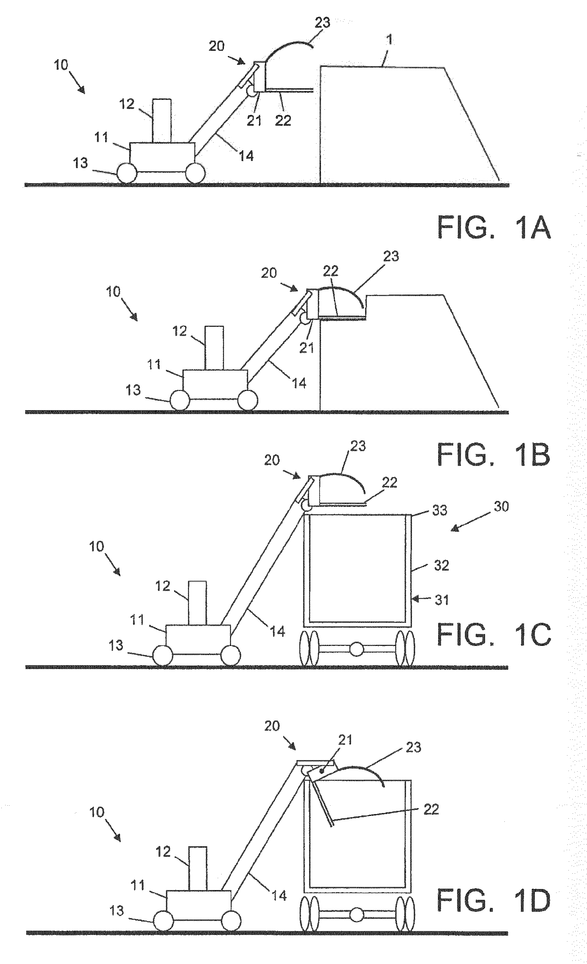

For transporting this material, it is typical to use a multiple purpose lifting truck fitted with a silage withdrawal gripper. The material may be loaded in lorries. The loading process is schematically illustrated in figure 1. A silage hill is indicated at reference numeral 1. Reference numeral 10 indicates a lifting truck, having a truck body 11 with a cabin 12 and wheels 13. At a front side, a lifting arm 14 is mounted to the truck body 11; this lifting arm typically is an articulated arm, but this is not shown for sake of simplicity. At its free end, directed away from the truck body 11, the lifting arm carries a silage withdrawal gripper 20. Typically, the silage withdrawal gripper 20 is fitted to the lifting arm 14 with a release coupling.

The silage withdrawal gripper 20 comprises three main components. A main frame 21 is coupled to the lifting arm 14. A silage carrier 22 is coupled to the main frame 21. A holder 23 or upper claw is coupled to the silage carrier 22. The silage carrier 22 can hinge with respect to the main frame 21. The holder 23 can hinge with respect to the silage carrier 22. The holder may for instance have the shape of a cover or inverted trough, or may have the shape of downward curved arms or teeth. The lifting truck is provided with hydraulic actuation members for actuating the hinging of the silage carrier 22 and the holder 23 and for holding the silage carrier 22 and the holder 23 in a certain hinged position. These hydraulic actuation members, which are not shown for sake of simplicity, are controlled by the driver of the lifting truck.

Depositing silage in a silage transport truck basically has the following four stages.

In a first stage, illustrated in figure 1A, the holder 23 is hinged to a raised position and the silage carrier 22 is hinged to a penetration position. The silage carrier 22 has a substantially flat carrier platform that projects away from the lifting arm 14. Proximate to the lifting arm 14, the silage carrier 22 may have a stopping wall, and at both sides the silage carrier 22 may have side walls, but these are not shown for sake of simplicity. In the penetration position, the carrier platform is directed horizontal. The driver now drives the lifting truck forward, so that the carrier platform penetrates the silage hill 1.

In a second stage, illustrated in figure 1B, the holder 23 is hinged downwards, so that it "bites" from above into the silage. A portion of silage is now captured between the holder 23 and the carrier platform.

In a third stage, the driver drives the lifting truck backwards, pulling the said portion of silage from the silage hill 1. With the silage withdrawal gripper 20 thus filled with silage, the lifting truck is driven to a transport truck 30, illustrated in figure 1C. For efficient transport, the transport truck 30 has a container 31 with high side walls 32, up to for instance 4 meters high. The lifting arm 14 is lifted and extended to reach high enough so that the silage carrier 22 is raised above the upper edge 33 of the container walls 32. The lifting truck is driven forward such that the silage carrier 22 is positioned above the open container 31.

In a fourth stage, illustrated in figure 1D, the silage is dumped into the container 31. To do this, the silage carrier 22 is hinged down to a dump position. In the dump position, the carrier platform is directed downwards at a steep angle, and ideally it is directed vertical. Further, in order to release the silage portion, the holder 23 is hinged upwards again.

When hinging the silage carrier 22 down to its dump position, a problem is that, since the holder 23 is hinged to an upper portion of the silage carrier 22, the holder 23 is moved forward, away from the truck body 11, but its orientation with respect to the silage carrier 22 remains the same and the silage carrier 22 does not let go of the silage. It is necessary that the holder 23 is hinged up with respect to the silage carrier 22, and when this is done, the holder 23 is actually hinged forward with respect to the arm 14. This all means that the center of gravity of the silage withdrawal gripper 20 is displaced further away from the truck body 11, which may lead to an unstable situation and/or to reduced transportation capability of the silage withdrawal gripper 20.

A further problem exists in the area of exchangeability. Depending on the consistency of the silage, it may be desirable to either have an open fork-type carrier with forward projecting prongs, or to have a closed trough-type carrier with a forward projecting closed bottom plate. And, since the lift truck is multiple purpose, it may be desirable to connect other implements to the truck, such as for instance a pusher or a shovel. It is of course possible to disconnect the main frame from the truck, and to then connect such implements to the truck directly, but it would be much more convenient if the main frame could stay attached to the truck and if the implements could be easily coupled to the main frame and disconnected from the main frame, respectively.

A further problem exists at the moment when gripping the silage. After the carrier has been pushed forward into the pile of silage, the holder is hinged down to grab a portion of silage and to hold that with the carrier. Depending on the nature and consistency of the silage, the holder has to bite or cut trough the silage with tremendous power, causing a downforce on the carrier, and the gripper should be designed for accommodating such downforce and for generating a counter force to keep the carrier in place. This means that the system for connecting the carrier to the main frame needs to be very reliable and robust.

In prior art, systems exist for connecting/disconnecting an implement to/from the arm of a lifting truck. Such systems invariably include bolts or pins that need to be placed or removed, but this is time-consuming and either requires additional personnel to assist or requires the truck operator to mount down from the cabin.

### SUMMARY OF THE INVENTION

An object of the present invention is to provide a silage withdrawal gripper where the problem of potential instability is eliminated or in any case reduced.

A further object of the present invention is to provide an automatic quick-release coupling for silage carriers and other implements, that can easily and reliably be operated by the truck operator from within the cabin.

According to a first aspect of the present invention, the carrier and the holder are each hinged to the main frame, independently from each other, and separate actuators, preferably implemented as hydraulic cylinders, are provided for individually hinging the carrier and the holder with respect to the main frame, independently from each other. Thus, when the carrier is hinged down to dump the silage, the holder may stay in position with respect to the main frame, and may if desired be hinged up without displacing the centre of gravity away from the lifting truck. Control of the cylinders is easily done by the operator of the lifting truck from within the truck's cabin.

According to a second aspect of the present invention, a quick-release coupling is provided for coupling the carrier to the main frame, this quick-release coupling comprising a latch that is operated by the carrier actuator.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figures 1A-1D schematically illustrate four stages of a silage withdrawal procedure;
figure 2 schematically shows a side view of an arm of a lifting truck;
figure 3 schematically shows a side view of an arm of a silage withdrawal gripper;
figure 4 schematically shows a perspective view of a fork-type silage carrier;
figure 5 schematically shows a side view of a quick release link plate in more detail;
figure 6 is a view comparable to figure 3, illustrating a latching mechanism;
figures 7A and 7B illustrate aspects of the operation of the invention;
figure 8 is a perspective front view of a preferred embodiment of the silage withdrawal gripper according to the present invention, with a closed bottom carrier attached;
figure 9 is a perspective rear view of the silage withdrawal gripper, with a spiked carrier attached;
figure 10 is a side view of the silage withdrawal gripper;
figure 11 is a side view of the silage withdrawal gripper at a larger scale;
figure 12 is a close-up showing the latching mechanism in open condition;
figures 13 and 14 show the latching mechanism in closed condition;
figure 15 is a perspective view of a latching lever.

### DETAILED DESCRIPTION OF THE INVENTION

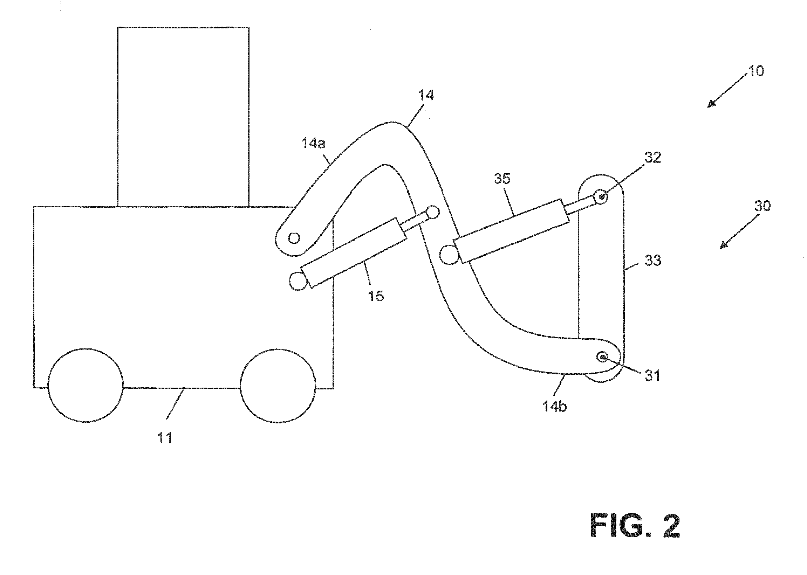

Figure 2 is a side view that schematically illustrates some details of an exemplary possible embodiment of a lifting truck 10. The lifting truck 10 has a lifting mechanism that includes a litting arm 14 having a proximate end 14a hinged to the truck body 11, and an opposite distal end 14b. An arm actuator 15, implemented as hydraulic cylinder, is mounted between the arm 14 and the truck body 11, and actuates the vertical position of the arm 14. At the distal end 14b, the arm 14 is provided with a connector head 30. The connector head 30 comprises two horizontal connector bars 31 and 32, indicated as lower connector bar 31 and upper connector bar 32. It is noted that such bars may each consist of two or more aligned bar pieces. The arm 14 in this example consists of two arm plates, arranged parallel to each other in respective vertical planes; the side view only shows one arm plate. The lower connector bar 31 is held at the distal end 14b by the two arm plates. The connector head 30 further comprises a link member 33, that like the arm 14 consists of two parallel link plates of which only one is visible in the side view. The link member 33 links the two horizontal connector bars 31 and 32 together. A head actuator 35, implemented as hydraulic cylinder, is mounted between the arm 14 and the upper connector bar 32. Actuated by the head actuator 35, the head 30 (i.e. the assembly 31, 32, 33) can hinge with respect to the arm 14 about a horizontal hinge axis that coincides with the centre axis of the lower connector bar 31. Link member 33 may rotate with respect to the lower connector bar 31, or the lower connector bar 31 may rotate with respect to the arm 14, or both.

It is noted that other embodiments of the lifting truck are also possible, and especially other embodiments of the lifting mechanism and/or other embodiments of the connector head are possible. The present invention is applicable in conjunction with any type of lifting truck, lifting mechanism or connector head, with suitable adaptations to the main frame for coupling to the connector head, as will be clear to a person skilled in the art. The silage withdrawal gripper discussed in the following is adapted for connection with a lifting truck of the above design. While it would be possible, in principle, to design a dedicated gripper whose components are mounted to the truck arm directly, the gripper of the invention comprises a main frame to which all gripper components are mounted, and the main frame can be connected to the connector head or disconnected from the connector head, so that it is possible to connect or disconnect the gripper as an integral unit without the necessity to take the gripper apart.

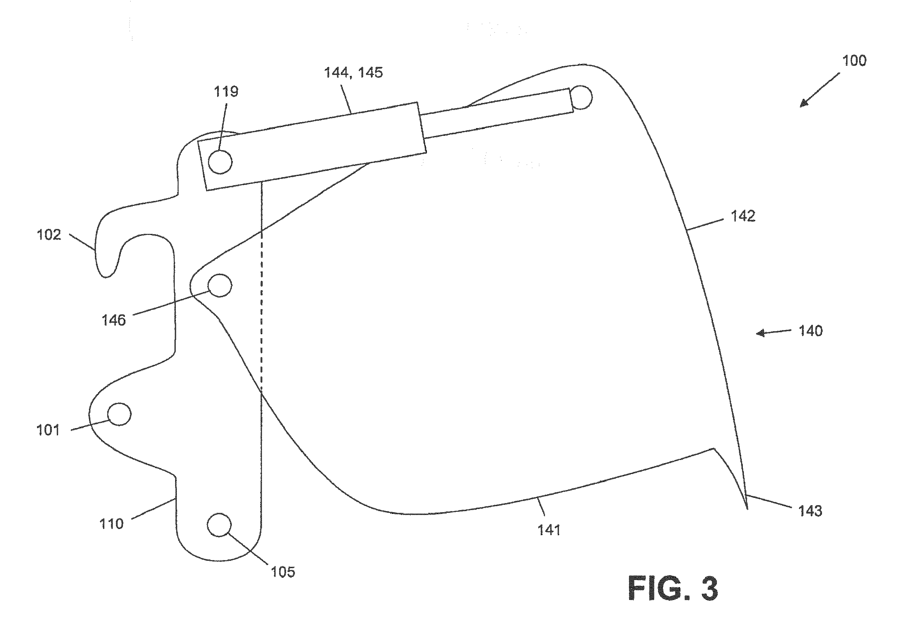

Figure 3 is a side view schematically illustrating a first aspect of a silage withdrawal gripper 100 according to the present invention. A main frame 110 of the gripper 100 is shown at reference numeral 110. At a rear side, the main frame 110 comprises coupling means 101, 102 for coupling to the connector head 30 of the lifting truck 10. These coupling means 101, 102 comprise a hook 102 with inverted U-shape, to be placed on the upper connector bar 32, and an eye 101 to be fixed to the links 33 or the lower connector bar 31, for instance by pins or bolts not shown. Although only one hook 102 is shown, the main frame 110 may comprise two or more aligned hooks, and the same applies to the eye 101. It should be clear that, once the hook(s) 102 is(are) placed on the upper connector bar 32 and the eye(s) 101 is(are) fixed to the link(s) 33, the main frame 110 is fixated with respect to the lifting truck's connector head 30 and will move integrally therewith.

Figure 3 also illustrates a second aspect of the present invention. A holder/cutter 140 in top view has a general U-shape, with a curved front plate 142 and two lateral side plates 141. A lower edge of the front plate 142 is a cutting edge, and may be provided with cutting teeth 143 as shown. At a rear end, the side plates 141 are hinged to the main frame 110 so that the holder/cutter 140 can hinge about a horizontal axis 146. At least one, but preferably two actuators 144, 145, preferably and as shown implemented as hydraulic cylinders, have their ends respectively connected rotatably to an upper end 119 of the main frame 110 and an upper corner 149 of the side plates 141 close to the front plate 142. When the actuators 144, 145 expand, the holder/cutter 140 hinges down so that the cutting edge can cut into a pile of silage.

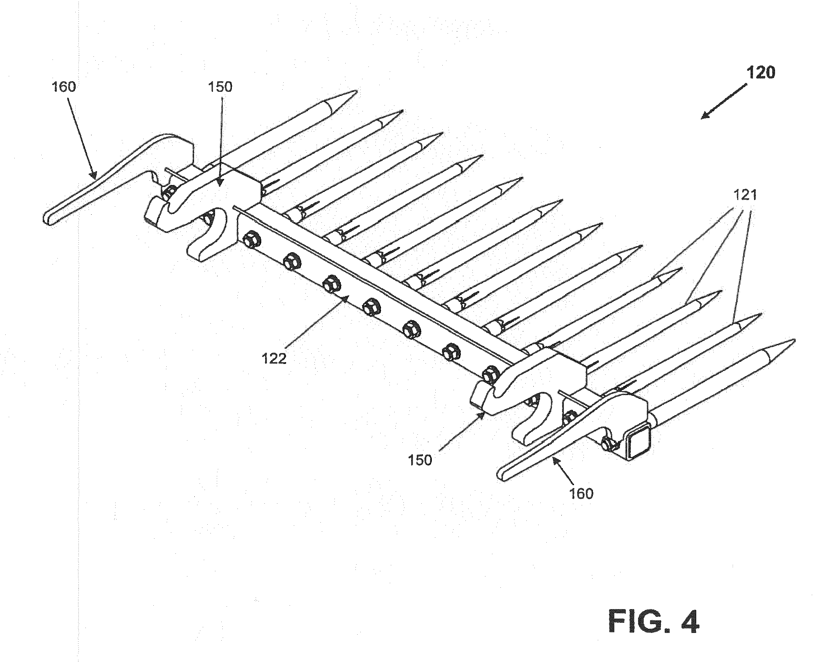

Figure 4 illustrates a third aspect of the present invention. A fork-type silage carrier 120, having prongs or spikes 121 mounted on a common support beam 122, is implemented for quick coupling to and release from the main frame 110. Close to the lower end of the main frame 110, a horizontal coupling bar 105 is provided, which may extend the entire width of the main frame 110 although this is not essential. Close to the extremities of the support beam 122, quick release link plates 150 are mounted to the support beam 122, projecting from the support beam 122 to the rear, i.e. extending opposite to the forward spikes 121.

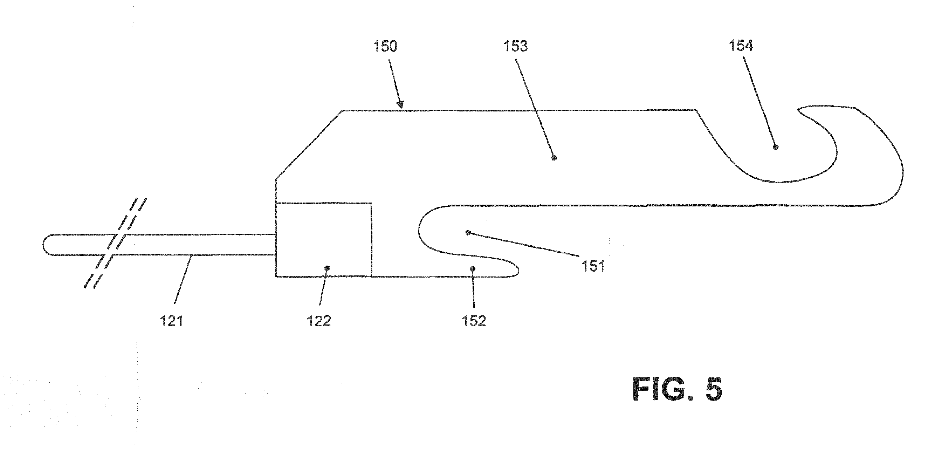

Figure 5 shows a quick release link plate 150 in more detail. At its underside, and close to the support beam 122, each quick release link plate 150 has an accommodation space 151 for accommodating a corresponding portion of the coupling bar 105. Below the accommodation space 151, a bottom portion 152 of the plate 150 extends to the rear. Above the accommodation space 151, a lever portion 153 of the plate 150 extends to the rear. The bottom portion 152 may be shorter than the lever portion 153, but this is not essential. Advantageously, the lower edge of the lever portion 153 is flat or slants upwards to the rear, although this is not essential. At the free end of the plate 150, a recess 154 is formed in the upper edge of the plate 150. Preferably, the bottom of the recess 154 is curved, as shown, and the plate 150 has a hooked contour to the rear of the recess 154.

The operation is as follows. In a "parking condition", the silage carrier 120 is lying on the ground. The truck operator drives the lifting truck 10 towards the carrier 120, approaching from the rear, with the arm 14 lowered so that the coupling bar 105 of the main frame 110 is close to the ground. In fact, the underside of the main frame 110 may scrape the ground. The operator aims the main frame 110 such that the horizontal coupling bar 105 dives under the lever portions 153 of the plates 150 and into the accommodation spaces 151. The main frame 110 may be provided with transverse guides to guide the plates 150 to the correct position with respect to the coupling bar 150.

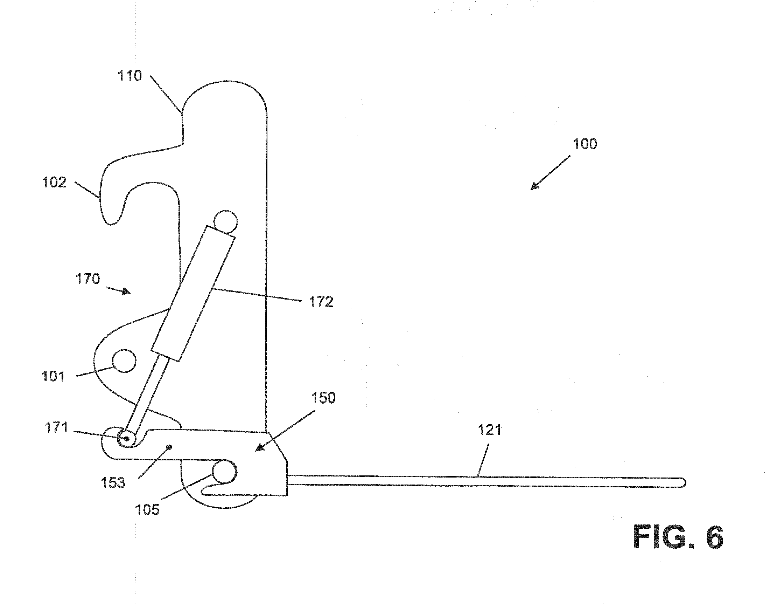

Friction with the floor will mainly keep the carrier 120 where it is, until the coupling bar 105 hits the front wall of the accommodation spaces 151. It is difficult for the operator to see the ends of the plates 150 projecting over the coupling bar 105, and thus it is difficult for the operator to see whether the coupling bar 105 has correctly entered accommodation spaces 151 sufficiently far, and more in general to see whether the carrier 120 is positioned correctly or not. To assist the operator, the carrier 120 is preferably provided with two position indicators 160, which are mounted at the respective ends of the support beam 122, and project from the support beam 122 to the rear, parallel to the link plates 150. If the carrier 120 is positioned correctly, the position indicators 160 extend over the coupling bar 105. The main frame 110 is provided with blocking means (not shown) that prevent the position indicators 160 and the link plates 150 from reaching over the coupling bar 105 unless the main frame 110 has the correct transverse position with respect to the carrier 120. The position indicators 160 have a larger horizontal extent to the rear than the link plates 150, and they may advantageously have their extremities painted bright white, so they are easier to see for the operator. If the operator actually sees the two white indicator ends, he knows that the carrier 120 is positioned correctly, particularly that the coupling bar 105 is positioned in the accommodation spaces 151 of the link plates 150. The operator now actuates the main frame's latching mechanism 170, which is illustrated in figure 6.

Figure 6 is a view comparable to figure 3, in which holder 140 is not shown for sake of clarity. Figure 6 illustrates that the main frame's latching mechanism 170 comprises, corresponding to each link plate 150, a vertically displaceable latch pin 171 which has its longitudinal direction in horizontal orientation, i.e. perpendicular to the plate 150. The pin 171 is controlled by the lower end of a latch actuator 172, of which the upper end is hinged to the main frame 110. The latch actuator 172 is conveniently implemented as a hydraulic cylinder, as shown. In a free condition, the latch cylinder 172 is contracted and the pin 171 is raised, so that the link plates 150 are free to move with respect to the coupling bar 105. In a latched condition, the cylinder 172 is expanded and the pin 171 is lowered and engages the recess 154 in the upper edge of the lever 153 of the plate 150. The carrier 120 is now protected against lateral movement: movement to the rear is prevented because the coupling bar 105 engages the accommodation spaces 151 of the link plates 150, while movement to the front is prevented because the latch pins 171 engage the corresponding recesses 154 in the upper edges of the levers 153.

The operator can now lift the arm 14 and drive away; the carrier 120 can be considered as being fixed with respect to the arm 14. Actually, the carrier 120 has one freedom of movement, and that is a rotation about the horizontal coupling bar 105. This rotation movement, or hinge movement, is controlled by the same latch cylinder 172. Since the combination of spikes 121 plus support beam 122 is heavier than the combination of link plates 150 and position indicators 160, and since the centre of gravity of the combination of spikes 121 plus support beam 122 is further removed from the coupling bar 105 than the centre of gravity of combination of link plates 150 and position indicators 160, the carrier 120 will have the tendency to hinge down under influence of gravity. Down pressure of the latch cylinder 172 will balance the gravitational force and keep the carrier steady.

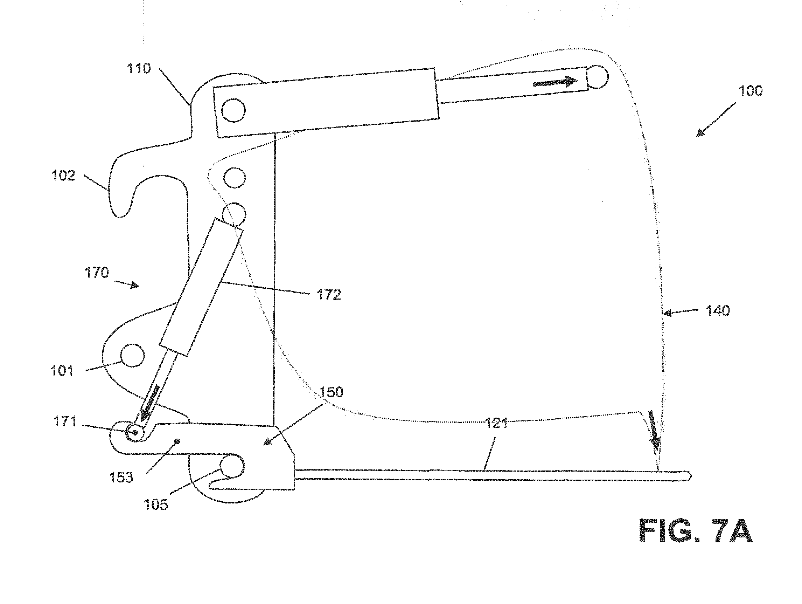

When the holder-cutter 140 is forced down to cut into the silage, as described, and thus creates a great downforce on the spikes 121 of the carrier 120, control will increase the down pressure exerted by the latch cylinders 172 to compensate, as illustrated in figure 7A.

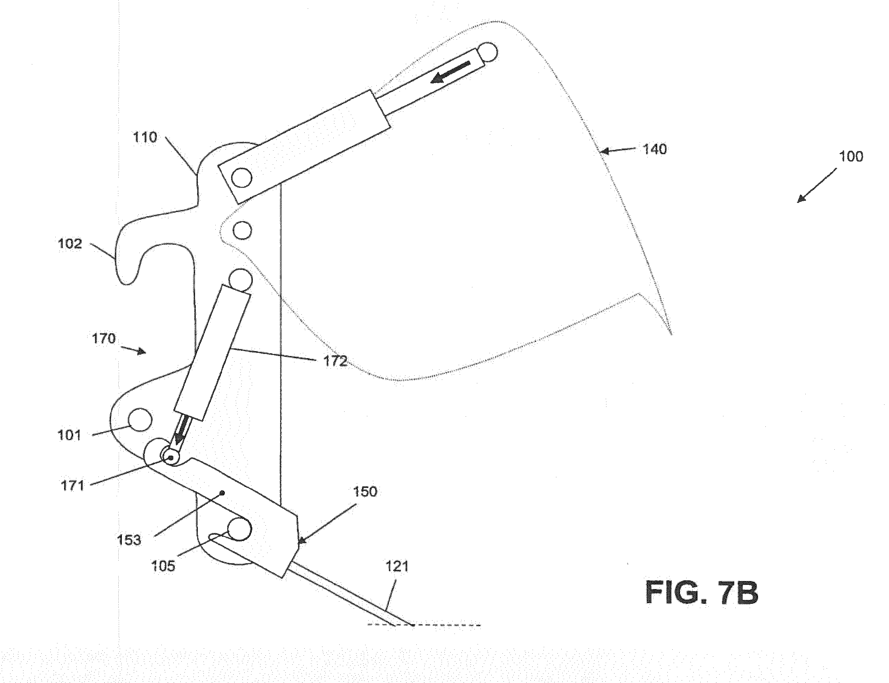

When on the other hand it is desired that the carrier 120 is moved down to allow its load of silage to be discharged, whether the holder-cutter 140 is kept in place or is raised at the same time, as illustrated in figure 7B, the latch cylinders 172 are contracted to allow the lever 153 to raise. It is noted that the carrier 120 can not "fall" from the coupling bar since the rear of the recess 154 will hook behind the latch pin 171.

In this respect, it is noted that the cylinders 172 of the latch mechanism / carrier hinge mechanism can be actuated independently from the holder actuators 144, 145. A control device for controlling these mechanisms, operated by the driver, is not shown for sake of simplicity.

When finally the driver wishes to disengage the carrier 120, he drives the lift truck 10 to the parking location for the carrier 120 and puts it down. He then simply operates the latch cylinders 172 to contract: this is the same operation as when lowering the carrier 120, but the carrier 120 can not be lowered because it is resting on the floor. Consequently, the levers 153 can not follow the lifting latch pins 171, and the latch pins 171 are raised from the recesses 154 of the levers 153 and the carrier 120 is released. The operator backs the lift truck 10 away from the carrier 120 which now rests on the floor: friction with the floor will keep the carrier 120 in place and the main frame's coupling bar 105 disengages from the accommodation spaces 151 of the link plates 150.

In general, since the carrier 120 is rather heavy, friction between the carrier 120 and the floor will provide sufficient counter force when engaging or disengaging the coupling bar 105. Nevertheless, some shifting movement of the carrier 120 may occur in the process. If desired, the floor may be provided with mechanical retainer members such as small elevations to secure the carrier 120 in place during engaging and disengaging.

It is noted that, as a matter of principle, a single link plate 150 would be sufficient to achieve the above-described operation, but preferably there are two link plates 150 positioned symmetrically with respect to the centre of the carrier 120, although the number of link plates may be three or more.

It is further noted that the latch mechanism 170 may comprise a dedicated latch cylinder 172 per link plate 150. It is possible to have the latch pin 171 mounted between two latch cylinders arranged in parallel, if it is desired to use smaller and cheaper cylinders. It is also possible to have two or more latch pins 171, and even to have all latch pins, mounted on a common cross bar that is pushed down by one (or more) latch cylinders, if it is desired to reduce costs by reducing the number of hydraulic cylinders.

It is noted that the carrier 120 may be provided with a back plate extending upright from the support beam 122, at approximately right angles with respect to the spikes 121. It is also possible that the main frame 110 is provided with a fixed back plate.

It is further noted that instead of being a fork-type carrier, the carrier may be of a different type, for instance a bucket-type carrier where the prongs 121 are replaced by a flat plate.

It should be clear from the above description that connecting or disconnecting a carrier, or exchanging carriers, or mounting another type of implement, is made very easy, quick and reliable. Connecting or disconnecting a carrier (or other implement) to or from the lift truck's arm is literally a matter of seconds.

In the embodiment as described above, the latch cylinder 172 engages the quick release link plates 150 of the carrier 120 directly. This is feasible, but requires guidance means for stabilizing the latch cylinder 172 in transverse direction. In the following, a preferred embodiment of the silage withdrawal gripper will be described in more detail, in which the latch cylinder 172 engages a rotary arm which in turn engages the quick release link plates 150 of the carrier 120.

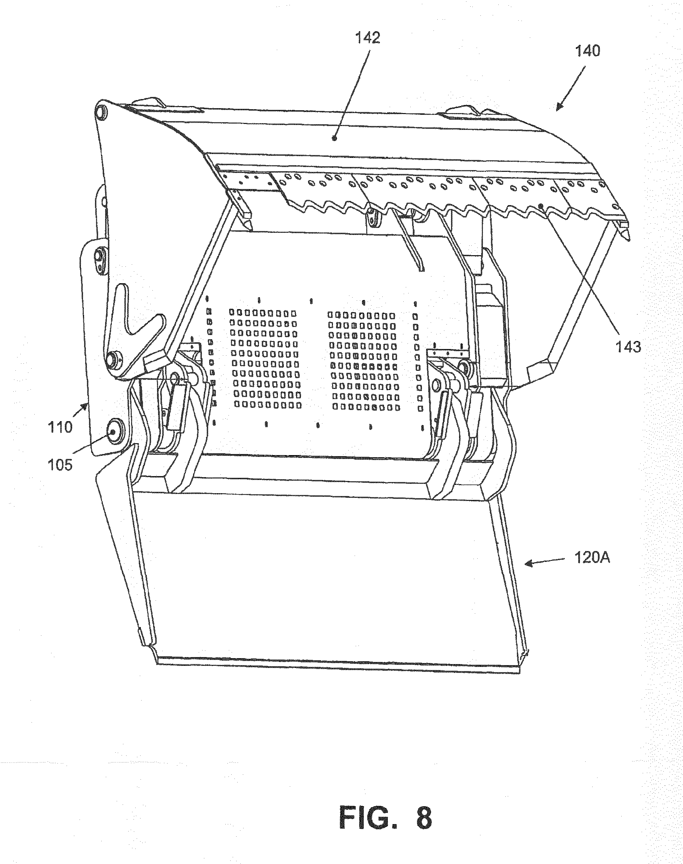

Figure 8 is a perspective front view of this embodiment, indicated by reference numeral 200 for sake of distinction. The holder/cutter 140 is in a raised position, while the carrier 120 is in a lowered position. In this view, the carrier 120 is a closed bottom version; for sake of convenience, this carrier will also be indicated as carrier 120A.

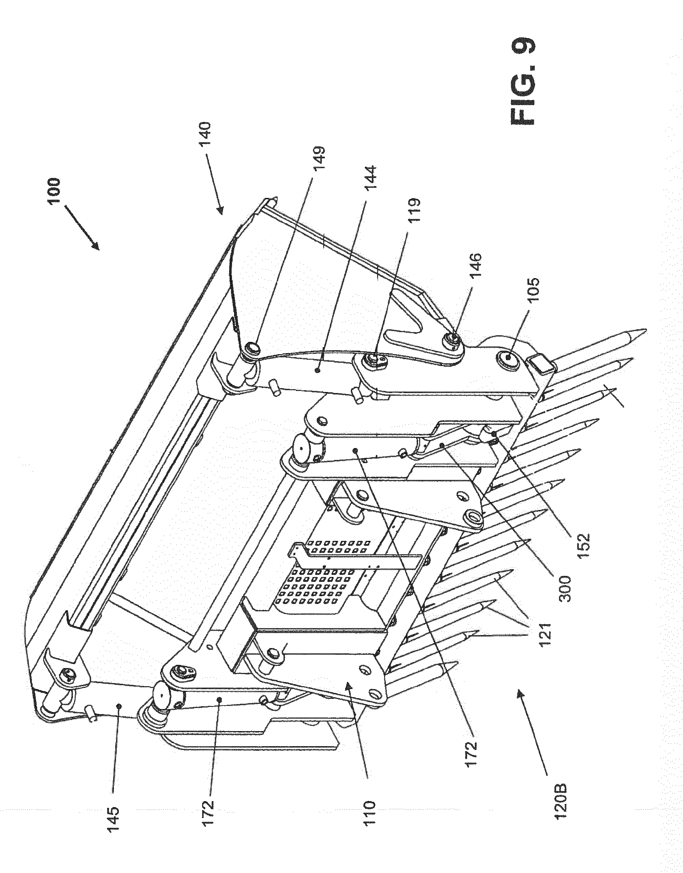

Figure 9 is a perspective rear view of the silage withdrawal gripper 200. The holder/cutter 140 is again in a raised position, while the carrier 120 is again in a lowered position. In this view, the carrier 120 is a version with spikes 121; for sake of convenience, this carrier will also be indicated as carrier 120B.

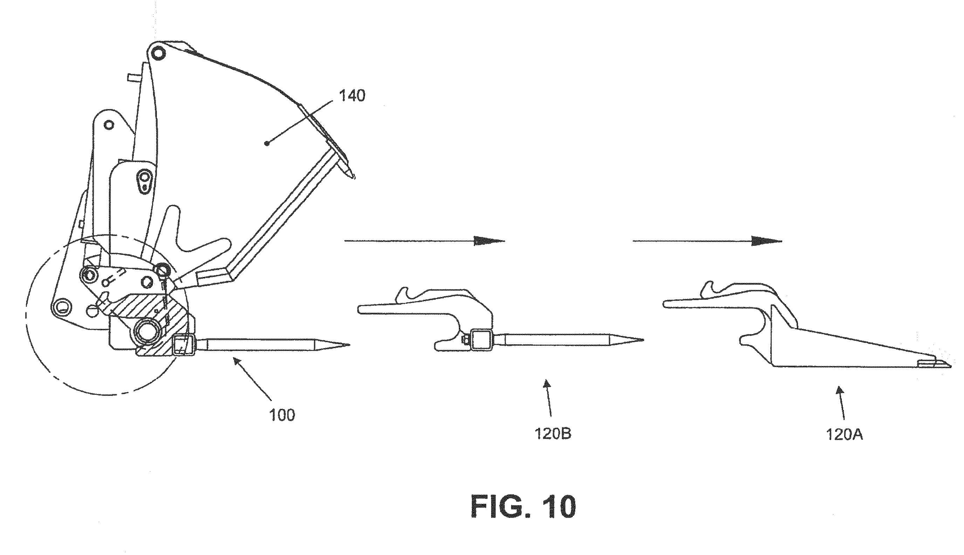

Figure 10 is a side view of the silage withdrawal gripper 200, showing the gripper in a condition for coupling with either the carrier 120A or the carrier 120B. The holder/cutter 140 is raised.

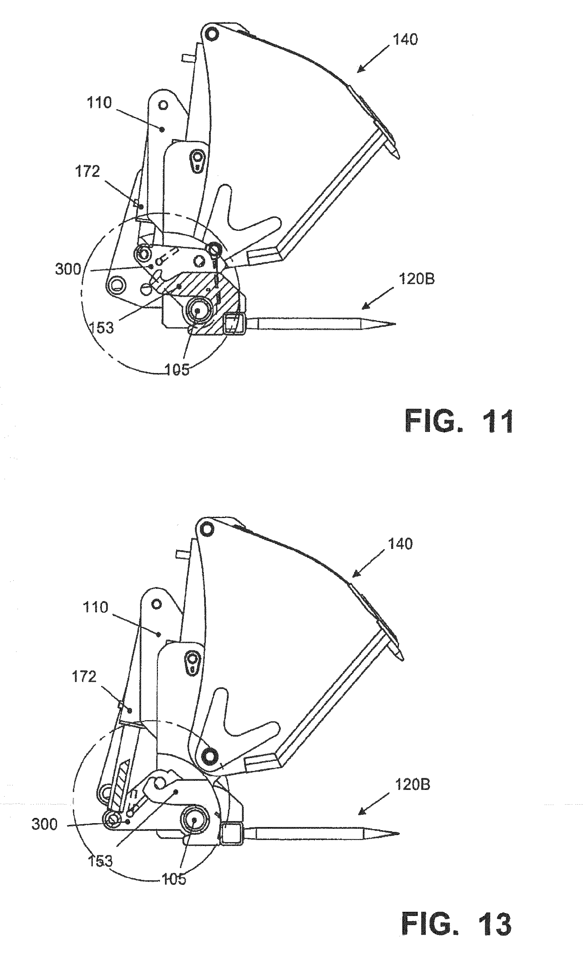

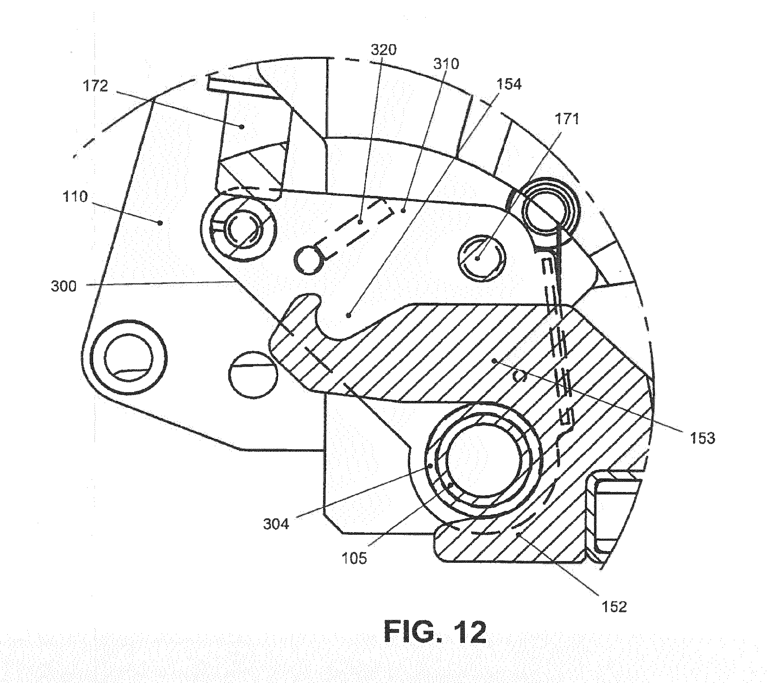

Figure 11 shows the gripper 200 at a larger scale, showing the latching mechanism 170 in open condition. Figure 12 is a close-up of a portion of the latching mechanism 170 in open condition.

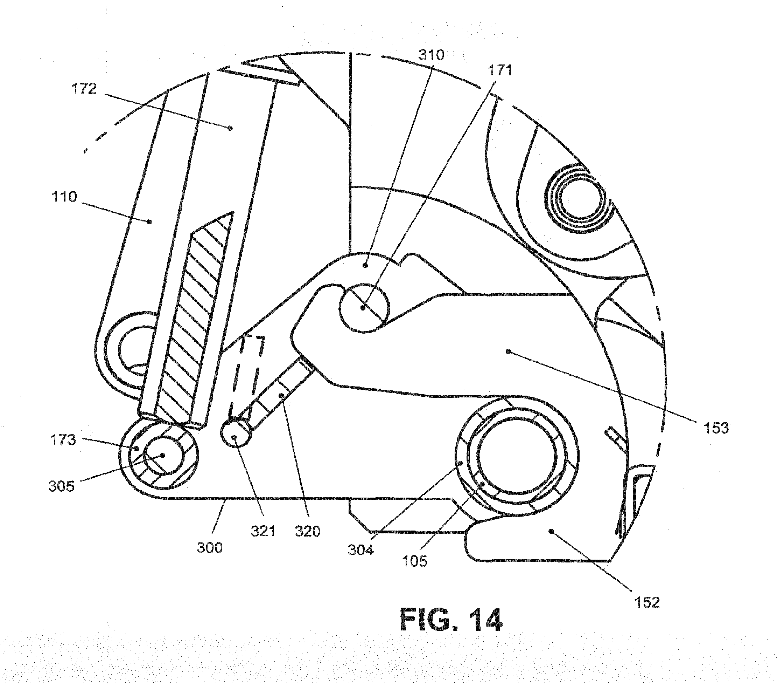

Figure 13 is a side view comparable to figure 11, showing the latching mechanism 170 in closed (secure) condition. Figure 14 is a close-up comparable to figure 12, of a portion of the latching mechanism 170 in closed (secure) condition.

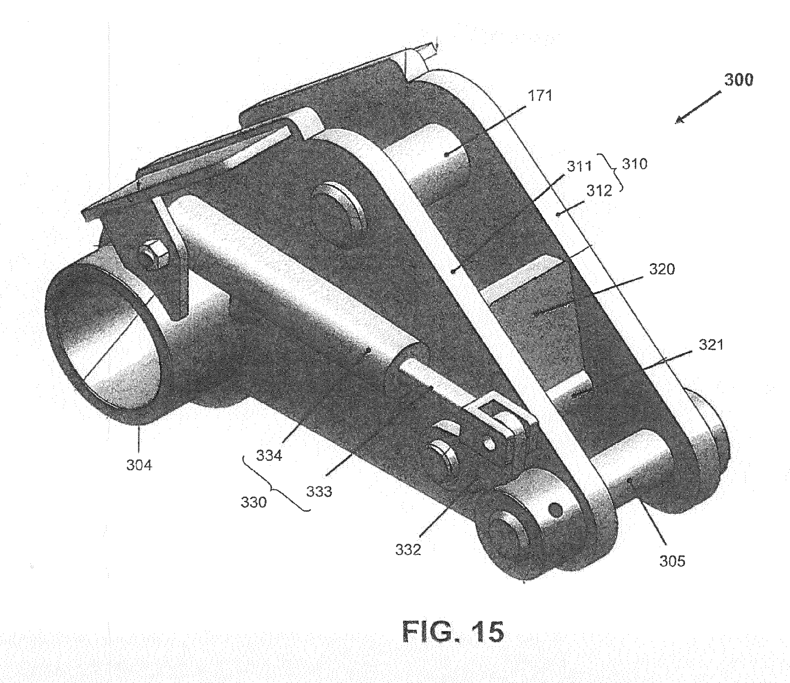

In this embodiment, the latching mechanism 170 comprises a latching lever 300 controlled by the latch actuator 172, which (in this embodiment) is implemented as a piston. Figure 15 is a perspective view of the latching lever 300.

The latching lever 300 comprises a hinge bush 304 mounted for hinging around the horizontal coupling bar 105. The latching lever 300 comprises a lever arm 310, extending perpendicular to the rotation axis of the hinge bush 304. For robustness, the lever arm 310 in this embodiment comprises two parallel arm plates 311, 312.

At a radial distance from the hinge bush 304, the latching lever 300 comprises an actuator joint axle 305 extending between the two arm plates 311, 312, parallel to the hinge bush 304. The upper end of the latch actuator piston 172 is hinged to the main frame 101, while the lower end of the latch actuator piston 172 is provided with an eye 173 hinged to the actuator joint axle 305. It is also possible that the axle 305 can rotate with respect to the arm plates 311, 312.

At some distance above the virtual plane defined by the axes of the hinge bush 304 and the actuator joint axle 305, the latching lever 300 comprises the latch pin 171 extending between the two arm plates 311, 312, parallel to the hinge bush 304. The hinge bush 304, the actuator joint axle 305 and the latch pin 171 are mounted in a triangular configuration.

In a first extreme position of the latching lever 300, shown in figures 11 and 12, the latch actuator piston 172 is in its contracted condition, the lever arm 310 is hinged up, and the latch pin 171 is located substantially above the hinge bush 304, thus having the maximal vertical distance from the hinge bush, which is larger than the vertical dimension of the lever portion 153 of the quick release link plates 150. In this condition, the carrier 120 can be coupled to the main frame. In this case, said lever portion 153 will extend between the two arm plates 311, 312, over the hinge bush 304 and under the latch pin 171. It is noted that the size of the accommodation space 151 (see figure 5) in this case is adapted to accommodate the hinge bush 304 extending around the horizontal coupling bar 105.

For latching, the latching lever 300 is now brought to a second extreme position, shown in figures 13 and 14. The latch actuator piston 172 is made to expand, causing the lever arm 310 to hinge down, so that the latch pin 171 moves downwards to the rear into the recess 154.

For increased safety, the latching lever 300 preferably comprises a safety catch 320 mounted between the two arm plates 311, 312. The safety catch 320 is attached to a catch axle 321 that extends perpendicular between the two arm plates 311, 312 and that can rotate with respect to these two arm plates 311,312. The safety catch 320 extends upwards to the front with respect to the catch axle 321. The position of the catch axle 321, in conjunction with the radial size of the safety catch 320, is chosen such that, in the second extreme position of the latching lever 300, the safety catch 320 has a latch position in which it engages the said lever portion 153 at the underside thereof. This is most clearly shown in figure 14. The safety catch 320 is provided with bias means 330, which will be discussed later, biasing the safety catch 320 toward its latch position. It will be understood that, even in case of failure of the latch actuator piston 172 (e.g. hydraulic failure), the lever arm 310 is prevented from rotating upwards to release the carrier 120. It will further be understood that, for hinging the carrier 120, the actuator piston 172 can be contracted and expanded, with the latching lever 300 rotating together with the carrier 120 as a whole, and that it is even possible for the actuator piston 172 to pull the lever portion 153 of the quick release link plates 150 upwards.

A possible embodiment of the bias means 330 will be discussed with reference to figure 15. At one end of the catch axle 321, outside the arm plates 311, 312, a control arm 332 is mounted. A free end of the control arm 332 is linked to an end of a piston 333 that is associated with a cylinder 334 at one end thereof. The opposite end of the cylinder is hinged with respect to the adjacent arm plate 311. Within the cylinder 334, a bias spring (not shown) exerts bias force on the piston 333 for pushing or pulling the piston 333 into the cylinder 334; this will cause a clockwise rotation of the catch axle 321 in figure 14, until the piston 333 meets a stop (not shown) defining the latch position of the safety catch 320.

It is noted that the piston and the cylinder can change places.

The cylinder 334 is a pneumatic or hydraulic cylinder. If actuated by increased pressure, the bias force of the bias spring is overcome and the piston 333 is pushed out of the cylinder 334, causing the safety catch 320 to be rotated counter-clockwise (figure 14) to a lifted position shown in figure 15, and shown in figures 13 and 14 in dotted lines. The catch is now disengaged. If the carrier 120 is resting on the ground, the latch actuator piston 172 can be contracted to lift the latch pin 171 out of the recess 154 for disengaging the carrier.

In the movement from the first extreme position to the second extreme position, the catch axle 321 stays free from the rear end of the lever portion 153. This is typically done with the cylinder 334 actuated, so that also the catch 320 stays free from the rear end of the lever portion 153. Then, when the second extreme position has been reached and actuation of the cylinder 334 is stopped or reversed, the safety catch 320 rotates to its latch position. However, even without actuation of the cylinder 334, the catch 320 will be lifted, in this case by the rear end of the lever portion 153.

Thus, the invention provides a silage withdrawal gripper that comprises:
at least one silage carrier;
a main frame provided with a horizontal coupling bar for coupling to the silage carrier;
a hingeable holder hingedly connected to the main frame;
at least one controllable holder actuator for controlling the hinge position of the holder with respect to the main frame;
wherein the silage carrier comprises quick release link plates for coupling to the coupling bar, wherein each quick release link plate comprises an accommodation space that is open at the rear for receiving the coupling bar, and a lever portion extending to the rear over the accommodation space;
wherein the lever portion, at its free end, has a recess formed in its upper edge;
wherein the main frame of the silage withdrawal gripper further comprises a controllable latching mechanism engaging said recess.

It should be clear to a person skilled in the art that the present invention is not limited to the exemplary embodiments discussed above, but that several variations and modifications are possible within the protective scope of the invention as defined in the appending claims. Even if certain features are recited in different dependent claims, the present invention also relates to an embodiment comprising these features in common. Any reference signs in a claim should not be construed as limiting the scope of that claim.

## Claims

1. Silage withdrawal gripper (100), comprising:
a main frame (110), adapted for coupling to a lifting arm of a lifting truck;
a hingeable holder (140) hingedly connected (146) to the main frame (110);
at least one controllable holder actuator (144, 145) for controlling the hinge position of the holder (140) with respect to the main frame (110);
at least one silage carrier (120) provided with quick release coupling means (150) for quick release coupling to the main frame (110);
a controllable combined latching/hinging mechanism (170) for latching the quick release coupling means (150) and for hinging the silage carrier (120) up/down.

2. Silage withdrawal gripper (100) according to claim 1, comprising:
wherein the main frame (110) is provided with a horizontal coupling bar (105) for coupling to the silage carrier (120);
wherein said quick release coupling means of the silage carrier (120) comprise quick release link plates (150) for coupling to said coupling bar (105), wherein each quick release link plate (150) comprises an accommodation space (151) that is open at the rear for receiving the coupling bar (105), a bottom portion (152) extending to the rear below the accommodation space (151), and a lever portion (153) extending to the rear over the accommodation space (151);
wherein the lever portion (153), at its free end, has a recess (154) formed in its upper edge;
and wherein said latching mechanism (170) is configured for engaging said recess (154).

3. Silage withdrawal gripper according to claim 2, wherein the latching mechanism (170) comprises a vertically displaceable latch pin (171) for engaging in said recess (154), and a latch actuator (172) attached to the main frame (110) and configured for raising or lowering the latch pin (171).

4. Silage withdrawal gripper according to claim 3, wherein the latch actuator (172) is implemented as a hydraulic cylinder.

5. Silage withdrawal gripper according to claim 3 or 4, wherein said latching mechanism (170) comprises a latching lever (300) carrying said latch pin (171) and mounted for hinging about said horizontal coupling bar (105), wherein said latch actuator (172) is hinged (173, 305) to said latching lever (300) for hinging said latching lever (300) about said horizontal coupling bar (105).

6. Silage withdrawal gripper according to claim 5, wherein the latching lever (300) comprises a lever arm (310), extending perpendicular to the rotation axis of the hinge bush (304) and comprising two parallel arm plates (311, 312), wherein said latch pin (171) extends between said two parallel arm plates (311, 312).

7. Silage withdrawal gripper according to claim 6, wherein the latching lever (300) comprises an actuator joint axle (305) extending between the two arm plates (311, 312) and coupled to said latch actuator (172).

8. Silage withdrawal gripper according to claim 7, wherein the coupling bar (105), the actuator joint axle (305) and the latch pin (171) are mounted in a triangular configuration.

9. Silage withdrawal gripper according to any of claims 5-8, wherein said latching mechanism (170) is configured for bringing the latching lever (300) in a first extreme position, in which the lever arm (310) is hinged up and the latch pin (171) is located substantially above the coupling bar (105), at a vertical distance larger than the vertical dimension of the lever portion (153) of the quick release link plates (150); and wherein said latching mechanism (170) is configured for bringing the latching lever (300) in a second extreme position, in which the lever arm (310) is hinged down and the latch pin (171) is located in the recess (154) of the lever portion (153) of the quick release link plates (150).

10. Silage withdrawal gripper according to claim 9, wherein the latching lever (300) further comprises a safety catch (320) hinged to the lever arm (310), wherein the safety catch (320) has a latch position in which it engages the underside of the lever portion (153) of the quick release link plates (150) when the latching lever (300) is in its second extreme position, and wherein the safety catch (320) has a release position in which it releases the lever portion (153) of the quick release link plates (150).

11. Silage withdrawal gripper according to claim 10, wherein the latching lever (300) further comprises actuation means configured for hinging the safety catch (320) from its latch position to its release position, and wherein the latching lever (300) preferably comprises bias means (330) configured for biasing the safety catch (320) toward its latch position.

12. Silage withdrawal gripper according to any of claims 3-11, wherein the latch actuator (172) is controllable to actuate a hinge motion of the silage carrier (120) about the coupling bar (105).

13. Silage withdrawal gripper according to any of claims 3-12, wherein the holder actuator (144, 145) is controllable for forcing the holder (140) to hinge down, and wherein the latch actuator (172) is controllable to simultaneously exert counterforce on the lever portions (153) to compensate for the downforce exerted on the silage carrier (120) by the holder (140).

14. Silage withdrawal gripper according to any of claims 3-13, wherein the latch actuator (172) is controllable to raise the lever portions (153) such as to allow the silage carrier (120) to hinge down, and wherein the holder actuator (144,145) is selectively controllable to simultaneously either keep the holder (140) in place or raise the holder (140).

15. Silage withdrawal apparatus, comprising a lifting truck (10) with a lifting arm (14) and a silage withdrawal gripper according to any of claims 1-14, wherein the apparatus preferably comprises a plurality of exchangeable silage carriers (120A, 120B).
